# NEW EUROPEAN PATENT SPECIFICATION

(11) **EP 3 587 012 B2**
(45) Date of publication and mention of the opposition decision: **02.07.2025**
(45) Mention of the grant of the patent: 03.08.2022
(21) Application number: 18179044.5
(22) Date of filing: 21.06.2018
(51) Int. Cl.: B23C 5/22, B23C 5/06

(54) **DOUBLE-SIDED TANGENTIAL MILLING INSERT**
DOPPELSEITIGER TANGENTIALER FRÄSEINSATZ
INSERT DE FRAISAGE TANGENTIEL À DOUBLE FACE

(43) Date of publication of application: 01.01.2020
(73) Proprietor: Ceratizit Luxembourg Sàrl, 8232 Mamer (LU)
(72) Inventor: KISTER, Fabien, 8232 Mamer (LU)
(74) Representative: Ciesla, Dirk

(56) References cited:
- WO-A1-2012/099153
- WO-A1-2017/047700
- WO-A1-2018/193437
- JP-A- 2008 229 745
- JP-A- 2013 121 636
- JP-B2- 3 185 519
- KR-A- 20060 135 211
- KR-B1- 100 718 306
- US-A1- 2006 104 736
- US-A1- 2013 108 388

## Description

The present invention relates to a double-sided tangential milling cutting insert for corner milling and to a tangential milling tool for corner milling comprising a holder having at least one insert seat to which such a double-sided tangential milling cutting insert is mounted.

In the technical field of milling cutting tools for machining of workpieces by cutting, often milling cutting tools are used which comprise a holder having at least one insert seat to which an exchangeable milling cutting insert is mounted. In many cases, the holder has a plurality of insert seats to each of which an exchangeable milling cutting insert is mounted. The exchangeable milling cutting inserts are typically made from a hard and wear-resistant material such as e.g. cemented carbide, cermet, CBN (cubic boron nitride), PCD (polycrystalline diamond), or the like, and the holder is typically made from a less-hard, tougher material such as a steel. In many cases, the surface of the milling cutting inserts is additionally coated with a hard coating applied by e.g. CVD (chemical vapor deposition) or PVD (physical vapor deposition).

In recent years there was a strong tendency to increase the number of individually useable cutting edge sections in milling cutting inserts. Typically, the milling cutting inserts comprise a number of individually useable cutting edge sections which can be used one after another by indexing, i.e. by rotating the insert about one or more predetermined symmetry axes by a predetermined angle, when a preceding cutting edge section is worn-out. More and more double-sided milling cutting inserts can be found comprising cutting edges both at an intersection between a first end surface and side surfaces and at an intersection between a second end surface and side surfaces.

JP 3 185 519 B2 shows a double-sided milling cutting insert having four cutting edge sections each comprising a main cutting edge, a raised corner and a wiper edge.

Depending on the orientation of the milling cutting inserts on the holder of the milling tool, distinction is made between, on the one hand, thus-called radial milling cutting inserts and corresponding radial milling tools and, on the other hand, thus-called tangential milling cutting inserts and corresponding tangential milling tools. In the case of radial milling cutting inserts, the main extension of the cutting insert is in a plane which is substantially radial with regard to a rotational axis of the milling tool during machining, whereas in the case of tangential milling cutting inserts the main extension of the cutting insert is in a plane which is substantially tangential with regard to the rotational axis of the milling tool during machining. Both realizations come along with certain advantages and certain disadvantages and specific problems due to the radial or tangential arrangement.

In particular in the case of double-sided milling cutting inserts, the orientation of the milling cutting inserts when mounted to the holder must be such that other individually useable cutting edge sections do not become damaged while in a passive position. Often, this requires a very strong axial and radial tilting of the milling cutting inserts relative to the tool holder which comes along with a deterioration of the chip-evacuation performance of the milling tool.

Further, there is an increasing demand for higher cutting speeds which result in increasing centrifugal forces acting on the milling cutting inserts during machining. In the case of tangential milling cutting inserts, which are typically mounted by a fastening screw passed through a through-hole penetrating the tangential milling cutting insert from one main side surface to the other main side surface, there is a risk that the tangential milling cutting insert becomes rotated about the axis of the through-hole due to high cutting forces acting on the active cutting edge section during machining.

It is an object of the present invention to provide an improved double-sided tangential milling cutting insert and an improved tangential milling tool for corner milling.

This object is solved by a double-sided tangential milling cutting insert for corner milling according to claim 1. Further developments are specified in the dependent claims.

Since the support surface comes closer to the first symmetry plane with increasing distance from the reference plane, rotation of the double-sided tangential milling cutting insert about the axis of the through-hole due to cutting forces acting on the active cutting edge section during machining can be reliably prevented by resting the support surface against a corresponding axial abutment surface of an insert seat in a holder. In other words, the planar support surface encloses an acute internal angle α of < 90° with the reference plane. Such rotation is particularly reliably prevented when a main seat surface of the cutting insert extends parallel to the reference plane. Rotation can be prevented by positive locking of the cutting insert in the insert seat. Preferably, the internal angle α can be in the range 60° < α < 88°.

The support surface is planar. Thus, the construction is particularly robust with regard to potential tolerances in both the shape of the double-sided tangential milling cutting insert and the position of the axial abutment surface of the insert seat which rests against the support surface.

The cutting insert has a third symmetry axis extending perpendicular to the first symmetry axis and to the second symmetry axis, the first symmetry axis and the third symmetry axis spanning a second symmetry plane, and the support surface comes closer to the first symmetry plane with increasing distance from the second symmetry plane. Thus, interaction of the support surface with a corresponding axial abutment surface in the insert seat of the holder can also reliable act against centrifugal forces acting on the double-sided tangential milling cutting insert during machining. In other words, the planar support surface encloses an acute internal angle β of < 90° with the second symmetry plane in this case. Preferably, the internal angle β can be in the range 65° < β < 88°.

According to a further development, adjacent the main cutting edges the main side surfaces are formed as main relief surfaces which come closer to the second symmetry plane with increasing distance from the reference plane. In other words, the main relief surfaces are inwardly inclined under an acute internal angle γ < 90° to the reference plane. In this case, the inactive cutting edge sections of the double-sided tangential milling cutting insert can be reliably protected, even when mounted in tangential milling tools having a small diameter, without requiring strong radial tilting of the milling cutting insert relative to the tool holder, which would deteriorate chip evacuation performance. Preferably, the internal angle γ can be in the range 70° < γ < 88°.

According to a further development, a width of the main relief surfaces decreases with increasing distance from the adjacent raised corner. In this case, the inactive cutting edge sections can particularly reliably be protected without strong radial tilting of the milling cutting insert and rotation about the axis of the through-hole can particularly reliably be prevented. Preferably, the main relief surfaces can extend along the main cutting edges from the raised corners towards the lowered corners over more than 60 percent and less than 95 percent of the length of the main cutting edges.

According to the invention, the secondary side surfaces each comprise a groove extending from the first end surface up to the second end surface. By this, a ramping operation of the tangential milling tool during machining, in which ramping operation the tangential milling tool is also moved with a directional component perpendicular to the surface of the workpiece, can be enabled to a certain extent for a tangential milling tool having a plurality of insert seats to which the double-sided tangential milling cutting inserts are mounted. According to a further development, a main seat surface extending parallel to the reference plane is formed in each of the first and second end surfaces. In this case, the double-sided tangential milling cutting can be particularly reliably be fastened in the insert seat of the holder. Preferably, the main seat surface can extend uninterruptedly at least substantially from one secondary side surface to the other secondary side surface such that a large support is provided.

According to a further development, the main seat surfaces are situated closer to the reference plane than the raised corners and the lowered corners are situated closer to the reference plane than the main seat surfaces. In this case, good chip evacuation properties are achieved and at the same time a very compact and stable construction of the double-sided tangential milling cutting insert is provided which can reliably be produced in a standard powder metallurgy production process.

The object is also solved by a tangential milling tool for corner milling according to claim 8. Further developments are defined in the dependent claims.

The tangential milling tool comprises a holder having at least one insert seat to which such a double-sided tangential milling cutting insert is mounted.

The tangential milling tool achieves the advantages that have been described above with regard to the double-sided tangential milling cutting insert.

According to a further development, the insert seat comprises a radial abutment surface against which a main side surface of the tangential milling cutting insert rests, a tangential abutment surface against which a main seat surface of the tangential milling cutting insert rests, and an axial abutment surface against which the support surface rests. In this case, the double-sided tangential milling cutting insert is securely held in the insert seat of the holder.

According to a further development, the tangential abutment surface and the axial abutment surface of the insert seat are arranged under an acute internal angle δ relative to each other. In this case, rotation of the double-sided tangential milling cutting insert about the axis of the through-hole is reliably prevented by positive locking engagement.

According to a further development, the radial abutment surface and the axial abutment surface of the insert seat are arranged under an acute internal angle ε relative to each other. In this case, movement of the cutting insert in the radial direction with regard to the rotational axis of the tangential milling tool is reliably prevented due to positive locking engagement also in this direction.

Further advantages and further developments of the invention will become apparent from the following description of an embodiment with reference to the enclosed drawings.

In the figures:
- Fig. 1:: is a schematic perspective illustration of a double-sided tangential milling cutting insert according to an embodiment;
- Fig. 2:: is a schematic side view along a second symmetry axis and perpendicular to a second symmetry plane of the tangential milling cutting insert;
- Fig. 3:: is a schematic top view along a first symmetry axis and perpendicular to a reference plane of the tangential milling cutting insert;
- Fig. 4:: is a schematic side view along a third symmetry axis and perpendicular to a first symmetry plane of the tangential milling cutting insert;
- Fig. 5:: is a schematic view on a main side surface perpendicular to a surface normal of one support surface;
- Fig. 6:: is a schematic view on the first end surface perpendicular to the surface normal of one support surface;
- Fig. 7:: is a perspective illustration of a tangential milling tool according to the embodiment having a plurality of insert seats and the double-sided tangential milling cutting insert mounted to one of the insert seats;
- Fig. 8:: is an enlarged detail of an insert seat for receiving the double-sided tangential milling cutting insert; and
- Fig. 9:: is an enlarged detail of the double-sided tangential milling cutting insert mounted to an insert seat of the tangential milling tool.

### EMBODIMENT

An embodiment will now be described with reference to the drawings.

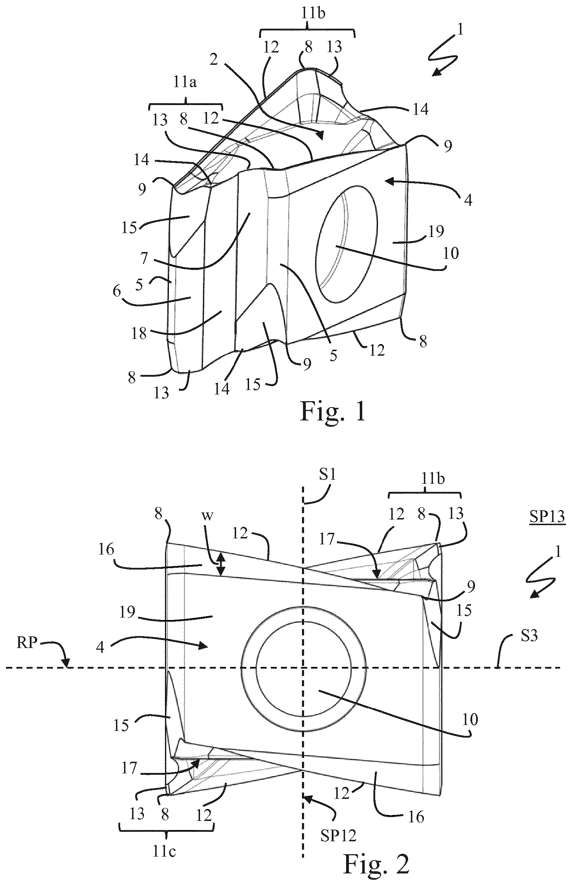

A double-sided tangential milling cutting insert 1 according to the embodiment is shown in Figs. 1 to 4 and will firstly be described. The tangential milling cutting insert 1 can in particular be made from cemented carbide or cermet and can be produced in a powder metallurgy production route by mixing of powder, pressing and subsequent sintering, as is per se well known in the art. Further, the milling cutting insert 1 may be coated with a hard coating in e.g. a PVD or CVD process. The tangential milling cutting insert 1 and the tangential milling tool 100 which will be described below are adapted for corner milling of at least substantially 90° shoulders.

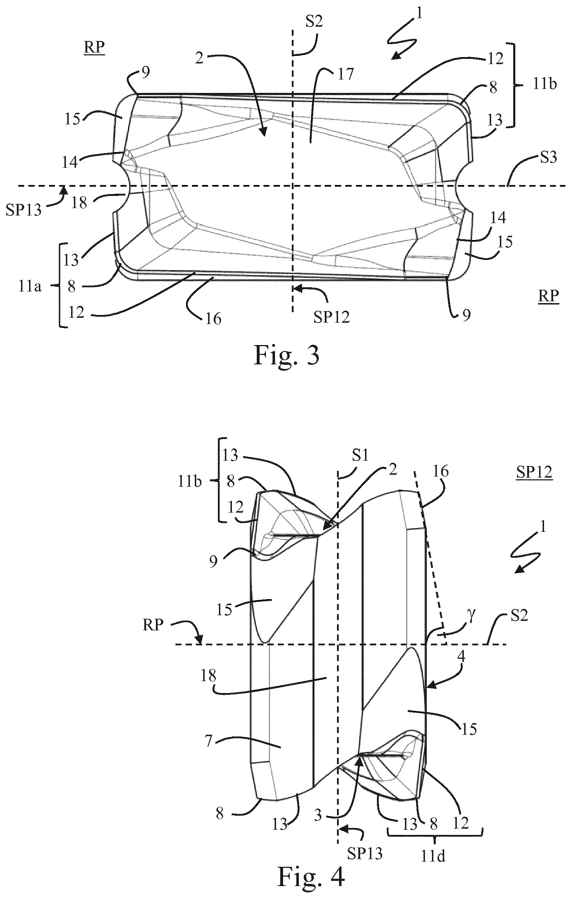

The tangential milling cutting insert 1 has a first end surface 2 and a second end surface 3 which have a substantially rectangular basic shape, as can be seen in Fig: 1 and Fig. 3. Further, the milling cutting insert 1 has two main side surfaces 4 extending between the long sides of the first and second end surfaces 2, 3, and two secondary side surfaces 6 extending between the short sides of the first and second end surfaces 2, 3. It should be noted that each of the first and second end surfaces 2, 3, the main side surfaces 4 and the secondary side surfaces 6 is segmented into a plurality of sub-surfaces, as will described more in detail below. The main side surfaces 4 and the secondary side surfaces 6 merge into one another via corner side surfaces 5. A through-hole 10 passes through the milling cutting insert 1 from one main side surface 4 to the other main side surface 4 and extends along a second symmetry axis S2 about which the milling cutting insert 1 has 2-fold rotational symmetry. A first symmetry axis S1 extends perpendicular to the second symmetry axis S2 and passes through the first and second end surfaces 2, 3. The milling cutting insert 1 has 2-fold rotational symmetry about the first symmetry axis S1. A third symmetry axis S3 extends perpendicular to both the first symmetry axis S1 and the second symmetry axis S2. The milling cutting insert 1 has 2-fold rotational symmetry about the third symmetry axis S3.

A reference plane RP is spanned by the second symmetry axis S2 and the third symmetry axis S3. Consequently, the reference plane RP extends perpendicular to the first symmetry axis S1. A first symmetry plane SP12 is spanned by the first symmetry axis S1 and the second symmetry axis S2 and thus extends perpendicular to the third symmetry axis S3. A second symmetry plane SP13 is spanned by the first symmetry axis S1 and the third symmetry axis S3 and thus extends perpendicular to the second symmetry axis S2.

Each of the first end surface 2 and the second end surface 3 has two diagonally opposed raised corners 8 and two diagonally opposed lowered corners 9. A first cutting edge section 11a and a second cutting edge section 11b are formed at the intersection of the first end surface 2 with main side surfaces 4, corner side surfaces 5 and secondary side surfaces 6. Similarly, a third cutting edge section 11c and a fourth cutting edge section 11d are formed at the intersection of the second end surface 3 with main side surfaces 4, corner side surfaces 5 and secondary side surfaces 6. Each of the first to fourth cutting edge sections 11a, 11b, 11c, 11d is formed by a main cutting edge 12, a raised corner 8 and a wiper edge 13. The respective main cutting edge 12 comes closer to the reference plane RP with increasing distance from the adjacent raised corner 8, as can be seen in Fig. 2. The respective wiper edge 13 does also come closer to the reference plane RP with increasing distance from the adjacent raised corner 8, as can be seen in Fig. 4. The main cutting edge 12 and the wiper edge 13 of each of the first to fourth cutting edge sections 11a, 11b, 11c, 11d merge into one another through the respective raised corner 8 having an outwardly curved shape in top view onto the first end surface 2 and onto the second end surface 3, respectively. In particular, the raised corner 8 can have a specific corner radius. The main cutting edges 12 extend from the respective raised corner 8 all the way to a lowered corner 9. The wiper edges 13 extend only along a portion of the secondary side surfaces 6 and are connected to the adjacent lowered corner 9 via a transitional edge portion 14. The raised corners 8 are situated at a larger distance from the reference plane RP that the lowered corners 9.

Adjacent to the respective cutting edge sections 11a, 11b, 11c, 11d, the first and second end surfaces 2, 3 are provided with inwardly inclined rake surfaces coming closer to the reference plane RP with increasing distance from the respective cutting edge section 11a, 11b, 11c, 11d. Further, the first and second end surfaces 2, 3 each comprise a main seat surface 17. The main seat surface 17 is formed as a planar surface extending parallel to the reference plane RP. As can be seen in Fig. 2, the main seat surface 17 is situated closer to the reference plane RP than the raised corners 8. Further, the lowered corners 9 are situated closer to the reference plane RP than the respective main seat surface 17. In the specific embodiment, the main seat surface 17 extends substantially from one secondary side surface 6 to the other secondary side surface 6.

As can be seen in Fig. 2, the main side surfaces 4 comprise main relief surfaces 16 in the region directly adjacent to the main cutting edges 12. The main relief surfaces 16 are inwardly inclined towards the first and second end surfaces 2, 3. In other words, the main relief surfaces 16 come closer to the second symmetry plane SP13 with increasing distance from the reference plane RP. In the embodiment shown, the main relief surfaces 16 extend under an internal angle γ < 90° to the reference plane RP, as can be seen in Fig. 4. The internal angle γ can be in the range 70° < γ < 88°, for example. As can be seen in Fig. 2, the width w of the main relief surfaces 16 decreases with increasing distance from the adjacent raised corner 8, such that the main relief surfaces 16 have a substantially triangular basic shape. Furthermore, the inwardly inclined main relief surfaces 16 do not extent along the entire main cutting edges 12, but instead end at a distance from the lowered corners 9. In the embodiment, the main relief surfaces 16 extend along the main cutting edges 12 from the raised corners 8 towards the lowered corners 9 over more than 60 percent and less than 95 percent of the length of the main cutting edges 12. In the region towards the reference plane RP, the main relief surfaces 16 merge into planar abutment surfaces 19 extending perpendicular to the second symmetry axis S2.

As can be seen in Fig. 1 and Fig. 4, the secondary side surfaces 6 are formed as wiper relief surfaces 7 in the region directly adjacent the respective wiper edges 13. In the embodiment, the wiper relief surfaces 7 are realized as planar surfaces extending parallel to the first symmetry axis S1. With increasing distance from the adjacent raised corner 8 each wiper relief surface 7 backs away from the first symmetry plane SP12 such that the wiper relief surface 7 and the first symmetry plane SP12 enclose a positive internal angle with each other, as can be seen in the top view of Fig. 3.

The secondary side surfaces 6 each comprise a groove 18 extending substantially parallel to the first symmetry axis S1 all the way from the first end surface 2 to the second end surface 3. The groove 18 can e.g. have the shape of a surface section of cylinder, as shown in the drawings. However, other shapes of the groove 18 are also possible. The transitional edge portions 14 connecting a respective wiper edge 13 to an adjacent lowered corner 9 have a curved and angled shape in top view, due to the groove 18. In the region adjacent the lowered corner 9, the transitional edge portion 14 is formed substantially straight in top view onto the respective first and second end surfaces 2, 3, as can be seen in Fig. 3. Directly adjacent to the straight section of the transitional edge portion 14, the respective secondary side surface 6 is provided with a support surface 15 serving inter alia for axially positioning the milling cutting insert 1 in the insert seat of a tangential milling tool.

In the specific embodiment, the support surface 15 is formed as a planar surface. In the direction towards the second end surface 3, the support surfaces 15 associated with the first end surface 2 merge into the wiper relief surface 7 and the corner side surface 5 associated with the second end surface 3. Similarly, in the direction towards the first end surface 2, the support surfaces 15 associated with the second end surface 3 merge into the wiper relief surface 7 and the corner side surface 5 associated with the first end surface 2.

Now, the orientation of the support surfaces 7 will be described with reference to one of the support surfaces 7.

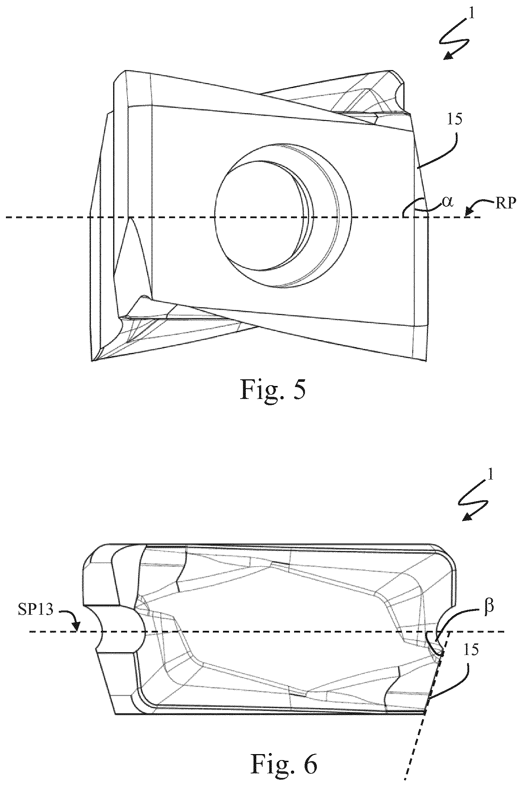

As can be seen in Fig. 2, the support surface 15 comes closer to the first symmetry plane SP12 with increasing distance from the reference plane RP. In other words, the support surface 15 associated with the transitional edge portion 14 along the first end surface 2 is inwardly inclined towards the first end surface 2. As can be seen in the view perpendicular to the surface normal of the support surface 15 according to Fig. 5, the support surface 15 encloses an acute internal angle α < 90° with the reference plane RP. It is advantageous if the internal angle α is in the range 60° < α < 88°. Furthermore, as can be seen in Fig. 3, the support surface 15 is also inclined such that the support surface 15 comes closer to the first symmetry plane SP12 with increasing distance from the second symmetry plane SP13. In other words, the support surface 15 is also inwardly inclined in the direction from the groove towards the lowered corner 9. As can be seen in the view perpendicular to the surface normal of the support surface 15 according to Fig. 6, the support surface 15 encloses an acute internal angle β < 90° with the second symmetry plane SP13. It is advantageous if the internal angle β is in the range 65° < β < 88°.

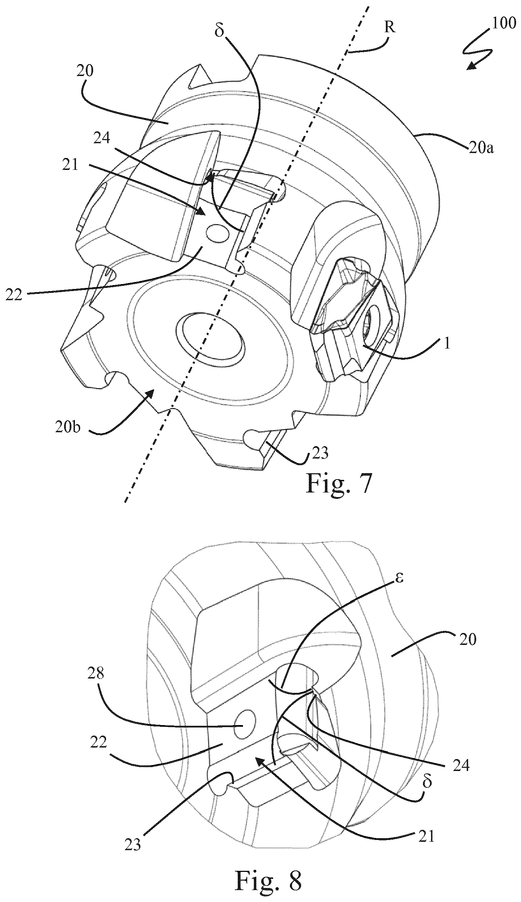

Now, a tangential milling tool 100 and positioning of the above described double-sided tangential milling cutting insert 1 in the tangential milling tool 100 will be described with reference to Figs. 7 to 9.

The tangential milling tool 1 comprises a holder 20 which can e.g. be made from steel. The holder 20 comprises a first end 20a adapted to be connected to a spindle of a milling machine (not shown) and a second end 20b provided with a plurality of insert seats 21 adapted for receiving the above described double-sided tangential milling cutting inserts 1. Although in the specific embodiment shown the tangential milling tool 100 comprises five insert seats for mounting the tangential milling cutting inserts 1, the tangential milling tool 100 may also have more (i.e. > 5) or less (i.e. < 5) such insert seats 21. However, the tangential milling tool 100 comprises at least one such insert seat 21. Preferably, the tangential milling tool 100 can comprise a plurality of such insert seats distributed about the circumference of the holder 20. The tangential milling tool 100 may also have several rows of insert seats 21 staggered along an axial direction of the rotational axis R about which the tangential milling tool 100 rotates during machining, i.e. the tangential milling tool 100 may also be realized as a thus-called porcupine cutter.

The positioning of the double-sided tangential milling cutting insert 1 will be described with regard to one of the insert seats 21 in the following. It should be noted that the positioning in the other insert seats 21 is in the same manner.

The insert seat 21 is formed such that the milling cutting insert 1 is oriented in a tangential orientation in which the second symmetry axis S2 of the milling cutting insert 1 is substantially radially oriented. It should be noted, however, that the second symmetry axis S2 is not oriented strictly in the radial direction with regard to the rotational axis R but is slightly tilted thereto. However, with regard to the axial direction, the radial direction and the tangential direction in relation to the rotational axis R of the tangential milling tool 100, the main directional component of the second symmetry axis S2 of the milling cutting insert 1 is in the radial direction. The insert seat 21 comprises a radial abutment surface 22 against which the abutment surface 19 of one of the main side surfaces 4 of the milling cutting insert 1 rests in order to prevent radial movement of the milling cutting insert 1 relative to the holder 20. A threaded bore 28 for receiving the threaded shank portion of a fastening screw 30 is formed in the radial abutment surface 22. The tangential milling cutting insert 1 is fastened to the insert seat 21 by the fastening screw 30 being passed through the through-hole 10 with its shank portion and by the screw head pressing against the internal surface of the through-hole 10, as is well known in the art.

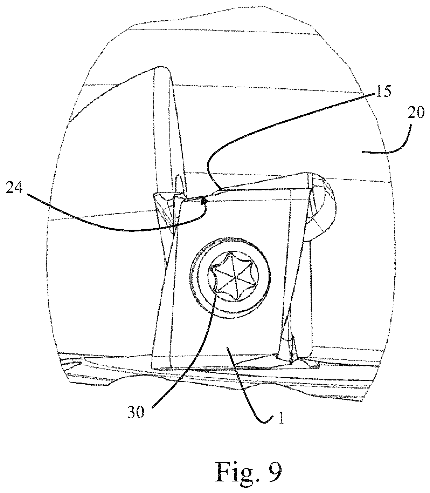

The insert seat 21 comprises a tangential abutment surface 23 against which one of the main seat surfaces 17 of the milling cutting insert 1 rests in order to prevent tangential movement of the milling cutting insert 1 relative to the holder 20. Further, the insert seat 21 comprises an axial abutment surface 24 against which the support surface 15 of the milling cutting insert 1 rests in order to prevent axial movement of the milling cutting insert 1 relative to the holder 20. The radial abutment surface 22 and the axial abutment surface 24 of the insert seat 21 are arranged under an acute internal angle ε relative to each other. Preferably, the acute internal angle ε corresponds at least substantially to the internal angle β described above for the milling cutting insert 1. By this orientation, the milling cutting insert 1 is securely held in a form-fitting manner in the insert seat 21 against centrifugal forces acting on the milling cutting insert 1 during machining. The tangential abutment surface 23 and the axial abutment surface 24 of the insert seat are arranged under an acute internal angle δ relative to each other. Preferably, this acute internal angle δ corresponds at least substantially to the internal angle α described above for the milling cutting insert 1. By this arrangement, rotation of the milling cutting insert 1 in the insert seat 21 about the axis of the through-hole 10 is reliably prevented by a form-fitting engagement, as can be taken from Fig. 9. It should be noted that the internal angles δ and ε appear slightly distorted in Fig. 7 and Fig. 8, as the respective views are not exactly orthogonal to the plane in which the angles are measured.

### List of reference signs

- 1: tangential milling cutting insert
- 2: first end surface
- 3: second end surface
- 4: main side surface
- 5: corner side surface
- 6: secondary side surface
- 7: wiper relief surface
- 8: raised corners
- 9: lowered corners
- 10: through-hole
- 11a: first cutting edge section
- 11b: second cutting edge section
- 11c: third cutting edge section
- 11d: fourth cutting edge section
- 12: main cutting edge
- 13: wiper edge
- 14: transitional edge portion
- 15: support surface
- 16: main relief surface
- 17: main seat surface
- 18: groove
- 19: abutment surface
- 100: tangential milling tool
- 20: holder
- 20a: first end
- 20b: second end
- 21: insert seat
- 22: radial abutment surface
- 23: tangential abutment surface
- 24: axial abutment surface
- 28: threaded bore
- 30: fastening screw
- S1: first symmetry axis
- S2: second symmetry axis
- S3: third symmetry axis
- RP: reference plane
- SP12: first symmetry plane
- SP13: second symmetry plane
- R: rotational axis
- α ,β,γ, δ, ε: angles

## Claims

1. A double-sided tangential milling cutting insert (1) for corner milling, comprising:
a first end surface (2),
an opposed second end surface (3),
two main side surfaces (4),
two secondary side surfaces (6),
a first symmetry axis (S1) a first symmetry axis (S1) passing through the first and second end surfaces (2, 3) extending perpendicular to a reference plane (RP) dividing the cutting insert into two halves,
the first and second end surfaces (2, 3) each having two diagonally opposed raised corners (8) and two diagonally opposed lowered corners (9), and
a through-hole (10) penetrating the two main side surfaces (4) and
extending along a second symmetry axis (S2),
wherein the first symmetry axis (S1) and the second symmetry axis (S2) span a first symmetry plane (SP12),
wherein first to fourth cutting edge sections (11a, 11b, 11c, 11d) are formed at the intersection of the first end surface (2) with the main side surfaces (4) and the secondary side surfaces (6) and at the intersection of the second end surface (3) with the main side surfaces (4) and the secondary side surfaces (6),
the first to fourth cutting edge sections (11a, 11b, 11c, 11d) each comprising a main cutting edge (12), a raised corner (8) and a wiper edge (13); the wiper edge (13) extending from the raised corner (8) along a portion of the secondary side surface (6),
wherein a transitional edge portion (14) connecting the wiper edge (13) to an adjacent lowered corner (9) is formed along the secondary side surface (6),
wherein adjacent to the transitional edge portion (14) the secondary side surface (6) has a planar support surface (15) which comes closer to the first symmetry plane (SP12) with increasing distance from the reference plane (RP), and
**characterized in that** the cutting insert has a third symmetry axis (S3) extending perpendicular to the first symmetry axis (S1) and to the second symmetry axis (S2), the first symmetry axis (S1) and the third symmetry axis (S3) spanning a second symmetry plane (SP13),
wherein the support surface (15) comes closer to the first symmetry plane (SP12) with increasing distance from the second symmetry plane (SP13), wherein the secondary side surfaces (6) each comprise a groove extending from the first end surface (2) up to the second end surface (3).

2. The double-sided tangential milling cutting insert (1) according to claim 1,
wherein the cutting insert has a third symmetry axis (S3) extending perpendicular to the first symmetry axis (S1) and to the second symmetry axis (S2) and the first symmetry axis (S1) and the third symmetry axis (S3) span a second symmetry plane (SP13), and
wherein, adjacent the main cutting edges (12), the main side surfaces (4) are formed as main relief surfaces (16), which come closer to the second symmetry plane (SP13) with increasing distance from the reference plane (RP).

3. The double-sided tangential milling cutting insert (1) according to claim 2, wherein a width (w) of the main relief surfaces (16) decreases with increasing distance from the adjacent raised corner (8).

4. The double-sided tangential milling cutting insert (1) according to claim 2 or 3, wherein the main relief surfaces (16) extend along the main cutting edges (12) from the raised corners (8) towards the lowered corners (9) over more than 60 percent and less than 95 percent of the length of the main cutting edges (12).

5. The double-sided tangential milling cutting insert (1) according to any one of the preceding claims, wherein a main seat surface (17) extending parallel to the reference plane (RP) is formed in each of the first and second end surfaces (2, 3).

6. The double-sided tangential milling cutting insert (1) according to claim 5, wherein the main seat surfaces (17) are situated closer to the reference plane (RP) than the raised corners (8) and wherein the lowered corners (9) are situated closer to the reference plane (RP) than the main seat surfaces (17).

7. A tangential milling tool (100) for corner milling, comprising a holder (20) having at least one insert seat (21) to which a double-sided tangential milling cutting insert according to any one of the preceding claims is mounted.

8. The tangential milling tool (100) according to claim 7, wherein the insert seat (21) comprises a radial abutment surface (22) against which a main side surface (4) of the tangential milling cutting insert rests, a tangential abutment surface (23) against which a main seat surface (17) of the tangential milling cutting insert rests, and an axial abutment surface (24) against which a support surface (15) rests.

9. The tangential milling tool (100) according to claim 7 or 8, wherein the tangential abutment surface (23) and the axial abutment surface (24) of the insert seat (21) are arranged under an acute internal angle (δ) relative to each other.

10. The tangential milling tool (100) according to any one of claims 7 to 9, wherein the radial abutment surface (22) and the axial abutment surface (24) of the insert seat (21) are arranged under an acute internal angle (ε) relative to each other.

## Patentansprüche

1. Doppelseitiger Tangential-Fräs-Schneideinsatz (1) zum Eckfräsen, aufweisend:
eine erste Endoberfläche (2),
eine gegenüberliegende zweite Endoberfläche (3),
zwei Hauptseitenoberflächen (4),
zwei sekundäre Seitenoberflächen (6),
eine erste Symmetrieachse (S1), die durch die erste und zweite Endfläche (2, 3) verläuft und sich senkrecht zu einer Referenzebene (RP) erstreckt, die den Schneideinsatz in zwei Hälften teilt, wobei die erste und die zweite Endoberfläche (2, 3) jeweils zwei diagonal gegenüberliegende angehobene Ecken (8) und zwei diagonal gegenüberliegende abgesenkte Ecken (9) haben, und
ein Durchgangsloch (10), das die beiden Hauptseitenoberflächen (4) durchdringt und sich entlang einer zweiten Symmetrieachse (S2) erstreckt,
wobei die erste Symmetrieachse (S1) und die zweite Symmetrieachse (S2) eine erste Symmetrieebene (SP12) aufspannen,
wobei erste bis vierte Schneidkantenabschnitte (11a, 11b, 11c, 11d) an der Schnittlinie der ersten Endoberfläche (2) mit den Hauptseitenoberflächen (4) und den sekundären Seitenoberflächen (6) und an der Schnittlinie der zweiten Endoberfläche (3) mit den Hauptseitenoberflächen (4) und den sekundären Seitenoberflächen (6) ausgebildet sind,
wobei die ersten bis vierten Schneidkantenabschnitte (11a, 11b, 11c, 11d) jeweils eine Hauptschneidkante (12), eine angehobene Ecke (8) und eine Planschneide (13) aufweisen, wobei sich die Planschneide (13) von der angehobenen Ecke (8) entlang eines Abschnitts der sekundären Seitenoberfläche (6) erstreckt,
wobei ein Übergangskantenabschnitt (14), der die Planschneide (13) mit einer benachbarten abgesenkten Ecke (9) verbindet, entlang der sekundären Seitenoberfläche (6) ausgebildet ist,
wobei die sekundäre Seitenoberfläche (6) benachbart zu dem Übergangskantenabschnitt (14) eine ebene Stützoberfläche (15) hat,
die sich mit zunehmendem Abstand von der Referenzebene (RP) der ersten Symmetrieebene (SP12) annähert, und
**dadurch gekennzeichnet, dass**
der Schneideinsatz eine dritte Symmetrieachse (S3) hat, die sich senkrecht zu der ersten Symmetrieachse (S1) und zu der zweiten Symmetrieachse (S2) erstreckt, wobei die erste Symmetrieachse (S1) und die dritte Symmetrieachse (S3) eine zweite Symmetrieebene (SP13) aufspannen,
wobei sich die Stützoberfläche (15) mit zunehmendem Abstand von der zweiten Symmetrieebene (SP13) der ersten Symmetrieebene (SP12) annähert, wobei die sekundären Seitenoberflächen (6) jeweils eine Rille aufweisen, die sich von der ersten Endoberfläche (2) bis zu der zweiten Endoberfläche (3) erstreckt.

2. Doppelseitiger Tangential-Fräs-Schneideinsatz (1) nach Anspruch 1, wobei der Schneideinsatz eine dritte Symmetrieachse (S3) hat, die sich senkrecht zu der ersten Symmetrieachse (S1) und zu der zweiten Symmetrieachse (S2) erstreckt und die erste Symmetrieachse (S1) und die dritte Symmetrieachse (S3) eine zweite Symmetrieebene (SP13) aufspannen, und wobei benachbart zu den Hauptschneidkanten (12) die Hauptseitenoberflächen (4) als Hauptfreiflächen (16) ausgebildet sind, die sich mit zunehmendem Abstand von der Referenzebene (RP) der zweiten Symmetrieebene (SP13) annähern.

3. Doppelseitiger Tangential-Fräs-Schneideinsatz (1) nach Anspruch 2, wobei eine Breite (w) der Hauptfreiflächen (16) mit zunehmendem Abstand von der benachbarten angehobenen Ecke (8) abnimmt.

4. Doppelseitiger Tangential-Fräs-Schneideinsatz (1) nach Anspruch 2 oder 3, wobei sich die Hauptfreiflächen (16) entlang den Hauptschneidkanten (12) von den angehobenen Ecken (8) in Richtung der abgesenkten Ecken (9) über mehr als 60 Prozent und weniger als 95 Prozent der Länge der Hauptschneidkanten (12) erstrecken.

5. Doppelseitiger Tangential-Fräs-Schneideinsatz (1) nach einem der vorangehenden Ansprüche, wobei eine Hauptsitzoberfläche (17), die sich parallel zu der Referenzebene (RP) erstreckt, in jeder von der ersten und der zweiten Endoberfläche (2, 3) ausgebildet ist.

6. Doppelseitiger Tangential-Fräs-Schneideinsatz (1) nach Anspruch 5, wobei sich die Hauptsitzoberflächen (17) näher zu der Referenzebene (RP) als die angehobenen Ecken (8) befinden und wobei sich die abgesenkten Ecken (9) näher zu der Referenzebene (RP) als die Hauptsitzoberflächen (17) befinden.

7. Tangential-Fräswerkzeug (100) zum Eckfräsen, aufweisend einen Halter (20) mit zumindest einem Einsatzsitz (21), an dem ein doppelseitiger Tangential-Fräs-Schneideinsatz nach einem der vorangehenden Ansprüche befestigt ist.

8. Tangential-Fräswerkzeug (100) nach Anspruch 7, wobei der Einsatzsitz (21) hat: eine Radialanlageoberfläche (22), an der eine Hauptseitenoberfläche (4) des Tangential-Fräs-Schneideinsatzes anliegt, eine Tangentialanlageoberfläche (23), an der eine Hauptsitzoberfläche (17) des Tangential-Fräs-Schneideinsatzes anliegt, und eine Axialanlageoberfläche (24), an der eine Stützoberfläche (15) anliegt.

9. Tangential-Fräswerkzeug (100) nach Anspruch 7 oder 8, wobei die Tangentialanlageoberfläche (23) und die Axialanlageoberfläche (24) des Einsatzsitzes (21) relativ zueinander unter einem spitzen Innenwinkel (δ) angeordnet sind.

10. Tangential-Fräswerkzeug (100) nach einem der Ansprüche 7 bis 9, wobei die Radialanlageoberfläche (22) und die Axialanlageoberfläche (24) des Einsatzsitzes (21) relativ zueinander unter einem spitzen Innenwinkel (ε) angeordnet sind.

## Revendications

1. Plaquette de coupe de fraisage tangentielle double face (1) pour fraisage d'angle, comprenant :
une première surface d'extrémité (2),
une seconde surface d'extrémité (3) opposée,
deux surfaces latérales principales (4),
deux surfaces latérales secondaires (6),
un premier axe de symétrie (S1) passant à travers les première et seconde surfaces d'extrémité (2, 3) et s'étendant perpendiculairement à un plan de référence (RP) divisant la plaquette de coupe en deux moitiés, les première et seconde surfaces d'extrémité (2, 3) comportant chacune deux coins surélevés (8) diagonalement opposés et deux coins abaissés (9) diagonalement opposés et
un trou débouchant (10) pénétrant dans les deux surfaces latérales principales (4) et s'étendant le long d'un deuxième axe de symétrie (S2),
le premier axe de symétrie (S1) et le deuxième axe de symétrie (S2) couvrant un premier plan de symétrie (SP12),
des première à quatrième sections d'arête de coupe (11a, 11b, 11c, 11d) étant formées à l'intersection de la première surface d'extrémité (2) avec les surfaces latérales principales (4) et les surfaces latérales secondaires (6) et à l'intersection de la seconde surface d'extrémité (3) avec les surfaces latérales principales (4) et les surfaces latérales secondaires (6),
les première à quatrième sections d'arête de coupe (11a, 11b, 11c, 11d) comprenant chacune une arête de coupe principale (12), un coin surélevé (8) et une arête de planage (13) ; l'arête de planage (13) s'étendant à partir du coin surélevé (8) le long d'une partie de la surface latérale secondaire (6),
une partie arête de transition (14) raccordant l'arête de planage (13) à un coin abaissé (9) adjacent étant formée le long de la surface latérale secondaire (6),
la surface latérale secondaire (6) comportant, à côté de la partie arête de transition (14), une surface de support (15) plane qui se rapproche du premier plan de symétrie (SP12) à mesure que la distance par rapport au plan de référence (RP) augmente, et
**caractérisée en ce que** la plaquette de coupe a un troisième axe de symétrie (S3) s'étendant perpendiculairement au premier axe de symétrie (S1) et au deuxième axe de symétrie (S2), le premier axe de symétrie (S1) et le troisième axe de symétrie (S3) couvrant un second plan de symétrie (SP13),
la surface de support (15) se rapprochant du premier plan de symétrie (SP12) à mesure que la distance par rapport au second plan de symétrie (SP13) augmente,
les surfaces latérales secondaires (6) comprenant chacune une rainure s'étendant de la première surface d'extrémité (2) jusqu'à la seconde surface d'extrémité (3).

2. Plaquette de coupe de fraisage tangentielle double face (1) selon la revendication 1,
la plaquette de coupe ayant un troisième axe de symétrie (S3) s'étendant perpendiculairement au premier axe de symétrie (S1) et au deuxième axe de symétrie (S2) et le premier axe de symétrie (S1) et le troisième axe de symétrie (S3) couvrant un second plan de symétrie (SP13), et
les surfaces latérales principales (4) étant formées, à côté des arêtes de coupe principales (12), comme des surfaces de dépouille principales (16), qui se rapprochent du second plan de symétrie (SP13) à mesure que la distance par rapport au plan de référence (RP) augmente.

3. Plaquette de coupe de fraisage tangentielle double face (1) selon la revendication 2, une largeur (w) des surfaces de dépouille principales (16) diminuant à mesure que la distance par rapport au coin surélevé (8) adjacent augmente.

4. Plaquette de coupe de fraisage tangentielle double face (1) selon la revendication 2 ou 3, les surfaces de dépouille principales (16) s'étendant le long des arêtes de coupe principales (12) des coins surélevés (8) en direction des coins abaissés (9) sur plus de 60 pour cent et moins de 95 pour cent de la longueur des arêtes de coupe principales (12).

5. Plaquette de coupe de fraisage tangentielle double face (1) selon l'une quelconque des revendications précédentes, une surface d'assise principale (17) s'étendant parallèlement au plan de référence (RP) étant formée dans chacune des première et seconde surfaces d'extrémité (2, 3).

6. Plaquette de coupe de fraisage tangentielle double face (1) selon la revendication 5, les surfaces d'assise principales (17) étant situées plus près du plan de référence (RP) que les coins surélevés (8) et les coins abaissés (9) étant situés plus près du plan de référence (RP) que les surfaces d'assise principales (17).

7. Fraise tangentielle (100) pour fraisage d'angle, comprenant un support (20) comportant au moins un siège de plaquette (21) auquel est fixée une plaquette de coupe de fraisage tangentielle double face selon l'une quelconque des revendications précédentes.

8. Fraise tangentielle (100) selon la revendication 7, le siège de plaquette (21) comprenant une surface d'appui radiale (22) contre laquelle une surface latérale principale (4) de la plaquette de coupe de fraisage tangentielle est en appui, une surface d'appui tangentielle (23) contre laquelle une surface d'assise principale (17) de la plaquette de coupe de fraisage tangentielle est en appui, et une surface d'appui axiale (24) contre laquelle une surface de support (15) est en appui.

9. Fraise tangentielle (100) selon la revendication 7 ou 8, la surface d'appui tangentielle (23) et la surface d'appui axiale (24) du siège de plaquette (21) étant disposées à un angle intérieur (δ) aigu l'une par rapport à l'autre.

10. Fraise tangentielle (100) selon l'une quelconque des revendications 7 à 9, la surface d'appui radiale (22) et la surface d'appui axiale (24) du siège de plaquette (21) étant disposées à un angle intérieur (ε) aigu l'une par rapport à l'autre.
